# EUROPÄISCHE PATENTSCHRIFT

(11) **EP 1 225 025 B1**
(45) Veröffentlichungstag und Bekanntmachung des Hinweises auf die Patenterteilung: **22.10.2003**
(21) Anmeldenummer: 01126989.1
(22) Anmeldetag: 14.11.2001
(51) Int. Cl.: B29C 45/67

(54) **Verriegelung für eine Säule**
Clamping device for a column
Verrouillage pour une colonne

(30) Priorität: 12.01.2001 DE 10101138
(43) Veröffentlichungstag der Anmeldung: 24.07.2002
(73) Patentinhaber: Battenfeld GmbH, D-58540 Meinerzhagen (DE)
(72) Erfinder: Füller, Klaus, Dipl.-Ing., 19061 Schwerin (DE); Elsner, Lothar, 19075 Pampow (DE)

(56) Entgegenhaltungen:
- EP-A- 0 841 143
- DD-A- 274 590
- DE-A- 2 812 301

## Beschreibung

Die Erfindung betrifft eine Verriegelung für eine Säule die aufweist,
einen Kolben mit einer Kolbenstange,
wobei die Kolbenstange in einer Klauenbuchse angeordnet ist,
wobei die Klauenbuchse und der Kolben in einer ein- oder mehrteiligen Platte angeordnet ist,
wobei der Kolben und die Klauenbuchse in der ein- oder mehrteiligen Platte bewegbar ist,
wobei die Klauenbuchse mindestens zwei Stufen aufweist, um die Krafteinleitung zu verteilen,
wobei die Kontur der Stufen zum Ende der Kolbenstange und/oder zum Ende der einsetzbaren Säule korrespondiert.

Verriegelungen der gattungsgemäßen Art sind bekannt und werden insbesondere in Zweiplattenspritzgießmaschinen eingesetzt. So beschreibt die **DD 274 590** zum Beispiel eine Verriegelung, die darauf abstellt, daß die Mittelsenkrechten der jeweiligen Berührungsflächen von Klauenbuchse und Kolben bzw. eingesetzter Stange sich in einem gemeinsamen Punkt schneiden. Die **DE 28 12 301 A1** schlägt eine Verriegelungseinheit vor, bei der freitragende Säulen in in einer Werkzeugaufspannplatte angeordnete Spannbuchsen eintauchen und am Ende Außenklauen aufweisen. Die Spannbuchsen verfügen innen über axial verlaufende Nuten, die durch Ringkanäle unterbrochen sind, wodurch Innenklauen gebildet werden. Beim Schließvorgang kommen die Innenklauen und die Außenklauen gegeneinander zum Anliegen, wodurch die bewegliche Werkzeugaufspannplatte mit der festen Werkzeugaufspannplatte formschlüssig verriegelt wird.

Mit der Problematik, eine Stange oder Säule einer Zweiplattenspritzgießmaschine mit einer zweiten Platte elastisch, aber fest verbinden zu könnnen beschäftigt sich auch die **US 3,465,387.** Die freitragenden Säulen werden in je ein Festlager und einem zweiten in einer Hülse angeordneten Lager geführt. Dieses zweite Lager ist durch die geometrische Form der Hülse begrenzt elastisch. Um die durch diese elastische Lagerung und die Massen der freitragenden Säulenenden entstehenden Lageabweichungen der Säulenenden von ihren Längsachsen beim Eintauchen in die Hochdruckschließzylinder ausgleichen zu können, sind diese sehr kompliziert aufgebaut. Die Verriegelungsbacken sind innerhalb der Druckflüssigkeitsdose so beweglich in der Hydraulikflüssigkeit gelagert, daß erhebliche Abweichungen der Säulen von ihren Längsachsen ausgeglichen werden können und so auch die beim Schließkraftaufbau erforderliche Bewegungsfreiheit der Verriegelungsbacken gewährleistet wird, die durch die Plattendurchbiegung notwendig ist. Diese vielteilige Zylinderkonstruktion ist jedoch sehr herstellungsaufwendig und stellt einen komplizierten Mechanismus aus vielen Einzelteilen dar und ist somit störanfällig.

Nachteilig bei den vorgeschlagenen Lösungen ist es, daß die Stange in einer aufwendigen Lagerung gehalten wird und die Übertragung der Kräfte über einen Punkt in die Stange erfolgt.

**Aufgabe** der Erfindung ist es, eine Lösung anzubieten, bei der die Kräfte verteilt eingeleitet werden, ohne daß dies erheblich zu Lasten der Elastizität im Lager führt.

Die **Lösung** der Aufgabe durch die Erfindung ist dadurch gekennzeichnet, dass sich der mittlere Radius (A) der ersten Stufe (7, 10) zum mittleren Radius (B) der zweiten Stufe (8, 9) unterscheidet. Durch diese Ausgestaltung wird erreicht, daß die auftretenden Kräfte auf unterschiedliche Ebenen übertragen werden. Dies gilt sowohl für die Übertragung auf die Säule als auch für den Kolben, aber auch für die Krafteinleitung in die Klauenbuchse.

Vorteilhafterweise sind die beiden unterschiedlichen Stufen doppelt ausgeführt, also einmal zwei Stufen, die zur Säule korrespondieren und unterschiedliche mittlere Radien der beiden korrespondierenden Konturen aufweisen und einmal zwei Stufen, die zum Kolbenende korrespondieren und unterschiedliche mittlere Radien der beiden korrespondierenden Konturen aufweisen. Durch die unterschiedlichen mittleren Radien (A, B) wird sichergestellt, daß der Kraftfluß, der auf die erste Stufe wirkt, an einer anderen Umfangslinie als der Kraftfluß, der auf die zweite Stufe wirkt, in die Säule (1) bzw. den Kolben eingeleitet wird. Vorzugsweise sind die beiden Doppelausführungen symmetrisch ausgeführt.

Besonders vorteilhaft ist es, wenn die korrespondierenden Flächen in einem Winkel α zur Mittelachse (17) der Säule ausgeführt sind. Der beste Kraftfluß wird erzielt, wenn der Winkel α zwischen 30° und 60°, vorzugsweise mit 45°, ausgeführt ist.

Die Querschnittsform der Säule bzw. des Kolbenendes spielt dabei keine Rolle, jeder sinnvoll und damit wirtschaftlich zu fertigende Querschnitt kann eingesetzt werden. Sicherlich ist ein runder Querschnitt allen anderen vorzuziehen, aber auch ein rechteckiger, achteckiger oder beispielsweise ein Polygon ist einsetzbar.

Die vorgeschlagene Lösung ist besonders geeignet, eine Schließeinheit einer Zweiplattenspritzgießmaschine zur Verarbeitung von plastifiziertem Kunststoffmaterial zu verriegeln.

In den Zeichnungen ist ein Ausführungsbeispiel der aufgabengemäßen Lösung dargestellt.
- Fig. 1: zeigt einen Halbschnitt durch die Verriegelung, und in
- Fig. 2: werden die mittleren Durchmesser dargestellt,
- Fig. 3: zeigt verschiedene Alternativen der projizierten Flächen, und
- Fig.4: stellt die Winkelverhältnisse und den Kraftfluß dar.

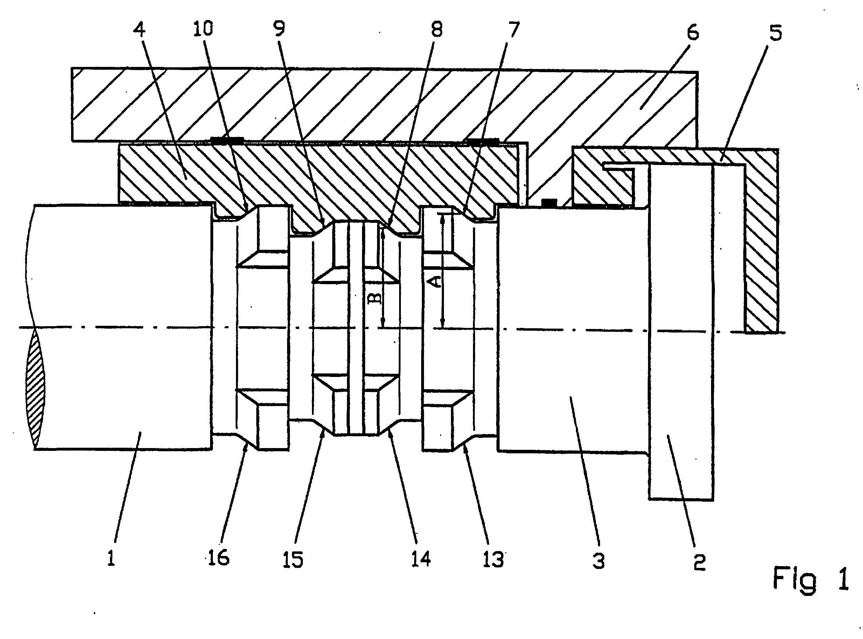

Figur 1 zeigt einen Halbschnitt durch die Verriegelung, es ist nur die obere Hälfte der Klauenbuchse 4 und der mehrteiligen Platte 5, 6 dargestellt. Es wird die Verriegelung für eine Säule 1 mit dem in einer zweiteiligen Platte 5, 6 eingesetzten Kolben 2 mit Kolbenstange 3 gezeigt.

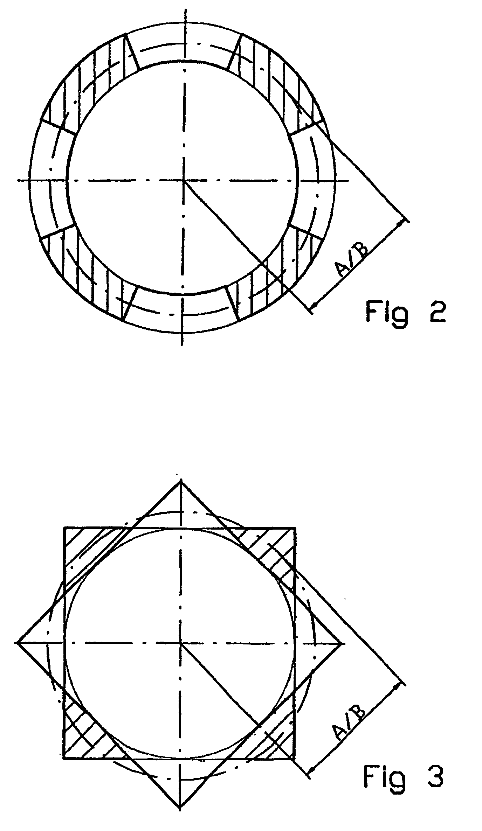

Die Kolbenstange 3 steht in Wirkverbindung mit der Klauenbuchse 4. Die Klauenbuchse 4 und der Kolben 2, 3 ist in der Platte 5, 6 beweglich gelagert. Die Klauenbuchse 4 weist mehrere Stufen auf. Zwei Stufen 7, 8 korrespondieren zur Kolbenstange 3, zwei Stufen 9, 10 korrespondieren zur Säule 1. Die erste Stufe 7 für den Kolben ist dabei symmetrisch zur ersten Stufe 10 für die Säule und die zweite Stufe 8 für den Kolben ebenfalls symmetrisch zur zweiten Stufe 9 für die Säule. Weiterhin sind die zu den Stufen 7, 8, 9, 10 korrespondierenden Flächen 13, 14, 15, 16 eingetragen. Eine zugehörige projizierte Fläche ist in Figur 2 schematisch aufgezeigt. Eine projizierte Fläche der ersten Stufe 13 oder 16 hat den mittleren Radius A und eine projizierte Fläche der zweiten Stufe 14 oder 15 hat den mittleren Radius B.

Einen alternativen Querschnitt zeigt Figur 3.

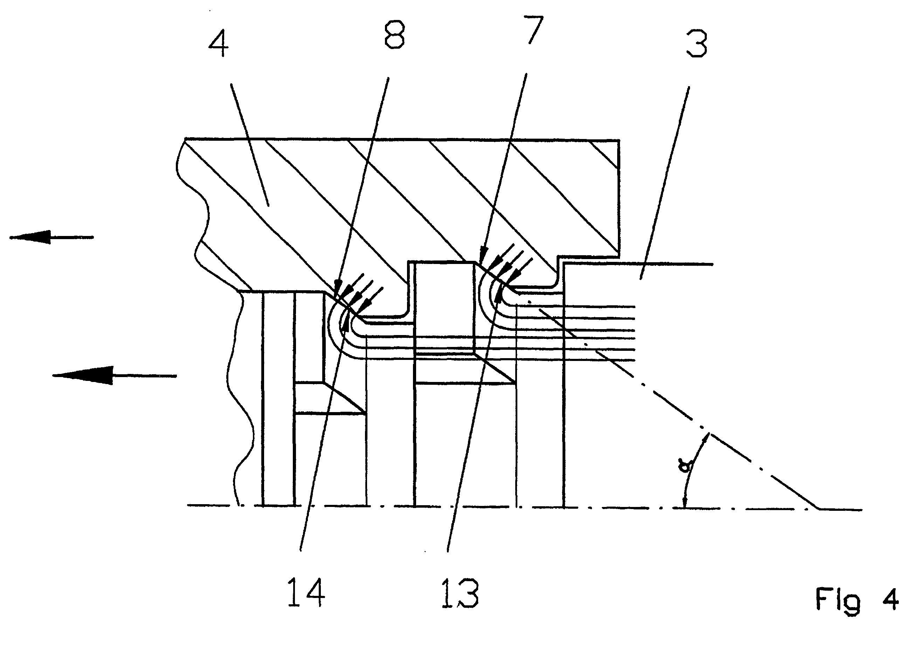

Aus Figur 4 ist die Winkelanordnung des Winkels α der Flächen in Bezug auf die Mittelachse 17 der Säule bzw. der Kolbenstange zu sehen. Weiterhin ist in Figur 4 der Kraftfluß und damit die Kräfteverteilung auf den Querschnitt der Säule 1 bzw. der Kolbenstange 3 dargestellt. Die auftretenden Zugkräfte in der Klauenbuchse 4 werden über die Stufen auf die korrespondierenden Flächen übertragen. Beispielhaft wurde hier die erste Stufe 7 und die zweite Stufe 8 mit den korrespondierenden Flächen 13 und 14 betrachtet. Die Zugkräfte in der Klauenbuchse 4 werden also auf die Flächen 13 und 14 als Druckkräfte übertragen. Durch die unterschiedlichen Durchmesser der projizierten Flächen 11 und 12 wird die Kraft auf unterschiedliche Ebenen im Kernquerschnitt der Kolbenstange 3 bzw. der Säule 1 übertragen. Die Kraft, die über die Fläche 13 eingeleitet wird, wirkt auf den äußeren und die Kraft, die über die Fläche 14 eingeleitet wird, mehr auf den inneren Bereich des Querschnittes. Die dargestellten Linien sollen diesen Kraftfluß verdeutlichen.

### Bezugszeichenliste:

- 1: Säule
- 2: Kolben
- 3: Kolbenstange
- 4: Klauenbuchse
- 5: Teil einer Platte
- 6: Teil einer Platte
- 7, 10: erste Stufe in Klauenbuchse 4
- 8, 9: zweite Stufe in Klauenbuchse 4
- 13: Kontur der Kolbenstangenfläche zur ersten Stufe 7
- 14: Kontur der Kolbenstangenfläche zur zweiten Stufe 8
- 15: Kontur der Säulenfläche zur zweiten Stufe 9
- 16: Kontur der Säulenfläche zur ersten Stufe 10
- 17: Mittelachse der Säule 1

- A: mittlerer Radius der projizierten Fläche zur ersten Stufe
- B: mittlerer Radius der projizierten Fläche zur zweiten Stufe
- α: Winkel der Flächen zur Säule 1

## Patentansprüche

1. Verriegelung für eine Säule (1) die aufweist,
einen Kolben (2) mit einer Kolbenstange (3),
wobei die Kolbenstange (3) in einer Klauenbuchse (4) angeordnet ist,
wobei die Klauenbuchse (4) und der Kolben (2) in einer ein- oder mehrteiligen Platte (5, 6) angeordnet ist,
wobei der Kolben (2) und die Klauenbuchse (4) in der ein- oder mehrteiligen Platte (5, 6) bewegbar ist,
wobei die Klauenbuchse (4) mindestens zwei Stufen (7, 8, 9, 10) aufweist, um die Krafteinleitung zu verteilen,
wobei die Kontur der Stufen (7, 8, 9, 10) zum Ende der Kolbenstange und/oder
zum Ende der einsetzbaren Säule (1) korrespondieren,
**dadurch gekennzeichnet, daß**
sich der mittlere Radius (A) der ersten Stufe (7, 10) zum mittleren Radius (B) der zweiten Stufe (8, 9) unterscheidet.

2. Verriegelung nach Anspruch 1, **dadurch gekennzeichnet, daß** die Klauenbuchse mit 4 Stufen ausgeführt ist, wobei jeweils zwei unterschiedliche Stufen zur Säule und zwei unterschiedliche Stufen zur Kolbenstange korrespondieren.

3. Verriegelung nach Anspruch 2, **dadurch gekennzeichnet, daß** zur Säule korrespondierende Stufen symmetrisch zu den zum Kolben korrespondierenden Stufen ausgeführt sind.

4. Verriegelung nach einem der Ansprüche 1 bis 3, **dadurch gekennzeichnet, daß** der Winkel (α) der Flächen (13, 14, 15, 16) zur Mittelachse (17) der Säule zwischen 30° und 60°, vorzugsweise mit 45°, ausgeführt ist.

5. Zweiplattenspritzgießmaschine zur Verarbeitung von vorzugsweise plastifiziertem Kunststoff, **dadurch gekennzeichnet, daß** die Schließeinheit der Maschine mit einer Verriegelung nach mindestens einem der Ansprüche 1 bis 3 ausgeführt ist.

## Claims

1. Lock for a column (1) which has a piston (2) with a piston rod (3), wherein the piston rod (3) is arranged in a claw bush (4), wherein the claw bush (4) and the piston (2) is arranged in a single-part or multi-part plate (5, 6), wherein the piston (2) and the claw bush (4) can be moved in the single-part or multi-part plate (5, 6), wherein the claw bush (4) has at least two stages (7, 8, 9, 10) in order to distribute the introduction of force, wherein the contour of the stages (7, 8, 9, 10) correspond to the end of the piston rod and/or to the end of the insertable column (1), **characterised in that** the central radius (A) of the first stage (7, 10) differs from the central radius (B) of the second stage (8, 9).

2. Lock according to claim 1, **characterised in that** the claw bush is designed with 4 stages, wherein in each case two different stages correspond to the column and two different stages correspond to the piston rod.

3. Lock according to claim 2, **characterised in that** stages corresponding to the column are designed to be symmetrical to the stages corresponding to the piston.

4. Lock according to one of claims 1 to 3, **characterised in that** the angle (α) of the surfaces (13, 14, 15, 16) to the central axis (17) of the column is designed between 30° and 60°, preferably at 45°.

5. Double-plate injection-moulding machine for processing of preferably plastified plastic, **characterised in that** the closing unit of the machine is designed with a lock according to at least one of claims 1 to 3.

## Revendications

1. Verrouillage pour une colonne (1) qui présente
un piston (2) pourvu d'une tige de piston (3),
la tige de piston (3) étant placée dans une douille à griffes (4),
la douille à griffes (4) et le piston (2) étant placés dans une plaque en une ou plusieurs parties (5, 6),
le piston (2) et la douille à griffes (4) étant mobiles dans la plaque en une ou plusieurs parties (5, 6),
la douille à griffes (4) présentant au moins deux gradins (7, 8, 9, 10) pour répartir l'application de force,
le contour des gradins (7, 8, 9, 10) correspondant à l'extrémité de la tige de piston et/ou
à l'extrémité de la colonne montable (1),
**caractérisé par le fait que**
le rayon moyen (A) du premier gradin (7, 10) diffère du rayon moyen (B) du deuxième gradin (8, 9).

2. Verrouillage selon la revendication 1, **caractérisé par le fait que** la douille à griffes est réalisée avec quatre gradins, deux gradins différents correspondant à la colonne et deux gradins différents correspondant à la tige de piston.

3. Verrouillage selon la revendication 2, **caractérisé par le fait que** des gradins correspondant à la colonne sont réalisés symétriquement des gradins correspondant au piston.

4. Verrouillage selon l'une des revendications 1 à 3, **caractérisé par le fait que** l'angle (α) entre les surfaces (13, 14, 15, 16) et l'axe (17) de la colonne est compris entre 30° et 60° et de préférence de 45°.

5. Machine de moulage par injection à deux plateaux pour la mise en oeuvre de matière plastique de préférence plastifiée, **caractérisée par le fait que** le dispositif de fermeture de la machine est réalisé avec un verrouillage selon au moins une des revendications 1 à 3.
